# EUROPEAN PATENT APPLICATION

(11) **EP 1 498 260 A1**
(43) Date of publication of application: **19.01.2005**
(21) Application number: 04291753.4
(22) Date of filing: 09.07.2004
(51) Int. Cl.: B32B 27/18, B60R 16/02, C09J 7/02

(54) **Protective member for protecting electric wires**

(30) Priority: 11.07.2003 JP 2003195633
(71) Applicant: Sumitomo Wiring Systems, Ltd., Yokkaichi-City, Mie, 510-8503 (JP); Kyoshin Co., Ltd., Aichi (JP); Goko Corp., Hiroshima (JP)
(72) Inventor: Sakaguchi, Takahiro, Yokkaichi-city Mie 510-8503 (JP); Fujisawa, Atsushi, Yokkaichi-city Mie 510-8503 (JP); Yamashita, Takamichi, Yokkaichi-city Mie 510-8503 (JP); Tsuji, Hiromichi, Nagoya-shi, Aichi (JP); Goto, Takeshi, Asaminami-ku Hiroshima (JP)
(74) Representative: Uchida, Kenji

(57) **Abstract**

A protective member for protecting electric wires includes: a non-woven cloth layer having flexibility and made of a chlorine-free resin; and an outer resin layer laminated monolithically on outer surface of the non-woven cloth layer, and made of a chlorine-free and fire-retardant resin, wherein a thickness of the outer resin layer is configured to be not more than a thickness of the non-woven cloth layer, and wherein a total thickness of the non-woven cloth layer and the outer resin layer is configured to have a predetermined wear resistance.

## Description

### BACKGROUND OF THE INVENTION

### Field of the Invention

The present invention relates to a protective member for protecting electric wires that includes a chlorine-free resin sheet for use in place of a conventionally used vinyl chloride sheet.

### Description of the Related Art

Conventionally, in wire harnesses including a group of electric wiring for connecting parts in automobiles, in general, vinyl chloride sheet as disclosed in JP-A-11-205945 has been used to protect the electric wiring from external interfering materials.

The characteristics required to this type of protective member for electric wires distributed to the automotive parts are, resistance against wear as such that it prevents damage in case the electric wiring is brought into contact with an external cushioning material, sufficient fire-retardancy which retards taking up fire, and flexibility as such that it is capable of bending along the electric wire and the connection path.

Thus, because vinyl chloride has been found as the optimal material from the viewpoint that it has wear resistance, fire-retardancy, and flexibility, and that it is yet inexpensive, vinyl chloride sheets and vinyl chloride tapes have been employed as the general use protective member for electric wires.

As described above, vinyl chloride sheet is the most effective material for use as the protective member for electric wires in automobiles from the viewpoint that it possesses the required functions and that it is inexpensive, however, vinyl chloride contains chlorine. Thus, it causes environmental problems because it generates dioxin when it is combusted on disposal.

Accordingly, the development of a protective member for electric wires made from chlorine-free resin for use as the substitute for vinyl chloride sheet is keenly demanded.

Thus, the present inventor also trial-produced sheets of polypropylene (PP) and polyethylene (PE) as a chlorine-free resin sheet for use as the substitute for vinyl chloride Sheet. Polypropylene and polyethylene are advantageous in that the materials are inexpensive and that they can be easily worked; however, they have problems as such that the wear resistance thereof is impaired when they are produced at the same thickness as that of a vinyl chloride sheet, and that they have no fire-retardancy.

In the case of sheets made of polyethylene or polypropylene, wear resistance and flexibility are conflicting demands. The wear resistance can be improved by increasing thickness, but increasing thickness impairs flexibility; the reduction in thickness ameliorates the flexibility but lowers the wear resistance, which is found problematic.

### SUMMARY OF THE INVENTION

The present invention has been made in the light of such circumstances, and one of objects of the invention is to provide a protective member for electric wires made from chlorine-free resin for use as a substitute of vinyl chloride, which possesses flexibility, wear resistance, and fire retardancy.

According to one aspect of the invention, there is provided a protective member for protecting electric wires, the protective member including:a non-woven cloth layer having flexibility and made of a chlorine-free resin; and an outer resin layer laminated monolithically on outer surface of the non-woven cloth layer, and made of a chlorine-free and fire-retardant resin, wherein a thickness of the outer resin layer is configured to be not more than a thickness of the non-woven cloth layer, and wherein a total thickness of the non-woven cloth layer and the outer resin layer is configured to have a predetermined wear resistance.

### BRIEF DESCRIPTION OF THE DRAWINGS

The objects and advantages of the present invention will become more apparent by describing preferred embodiments thereof in detail with reference to the accompanying drawings, wherein:
FIG. 1 is an oblique view of the protective member according to a first embodiment of the present invention;
FIG. 2A is a planar view of the non-woven cloth constituting a non-woven cloth layer, and FIG. 2B is an enlarged cross section view of a boundary between a non-woven cloth layer and an outer resin layer;
FIG. 3 is a schematic view showing the production method according to the first embodiment of the present invention;
FIGS. 4A to 4C show a method for covering electric wiring using the protective member;
FIG. 5 is a cross section view showing a protective member according to a modified first embodiment;
FIG. 6 is a cross section view showing a protective member according to a second embodiment; and
FIG. 7 is a cross section view showing a protective member according to a modified second embodiment.

### DETAILED DESCRIPTION OF THE PREFERRED EMBODIMENTS

Referring now to the accompanying drawings, a description will be given in detail of preferred embodiments of the invention.

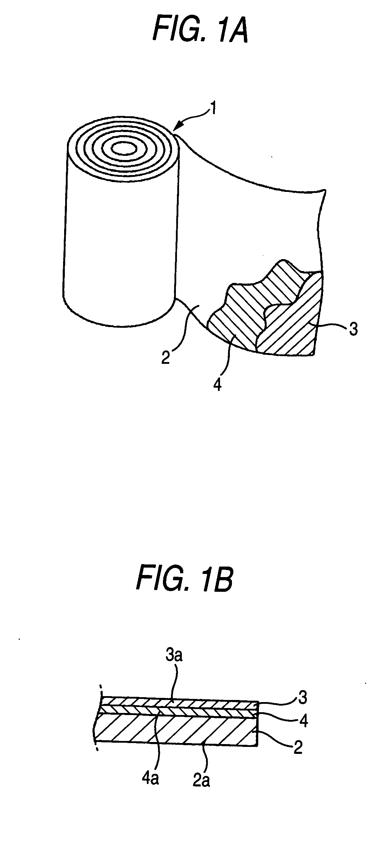

FIGS. 1A to 3 show a protective member according to a first embodiment. The protective member is provided as a sheet and is wound in a coil-like shape, and comprises a laminate structure in which a non-woven cloth layer 2 and an outer resin layer 3 are adhered monolithically by using an adhesive layer 4.

The non-woven cloth layer 2 is formed with a non-woven cloth 2a made of nylon. The outer resin layer 3 is made of a nylon film 3a, and the adhesive layer 4 is made of a PP alloy film 4a.

The non-woven cloth layer 2 is formed by a non-woven cloth 2a made from nylon. The outer resin layer 3 is made from nylon film 3a, and the adhesive layer 4 is made from a PP alloy film 4a.

The non-woven cloth layer 2 above has a thickness in a range of from 0.2 mm to 0.4 mm, and includes resin at a coverage in a range of 10 g/m² to 100 g/m². The outer resin layer 3 has a thickness in a range of from 0.03 mm to 0.2 mm. The adhesive layer 4 has a thickness in a range of from 0.02 mm to 0.2 mm, and has a resin coverage in a range of from 30 g/m² to 200 g/m².

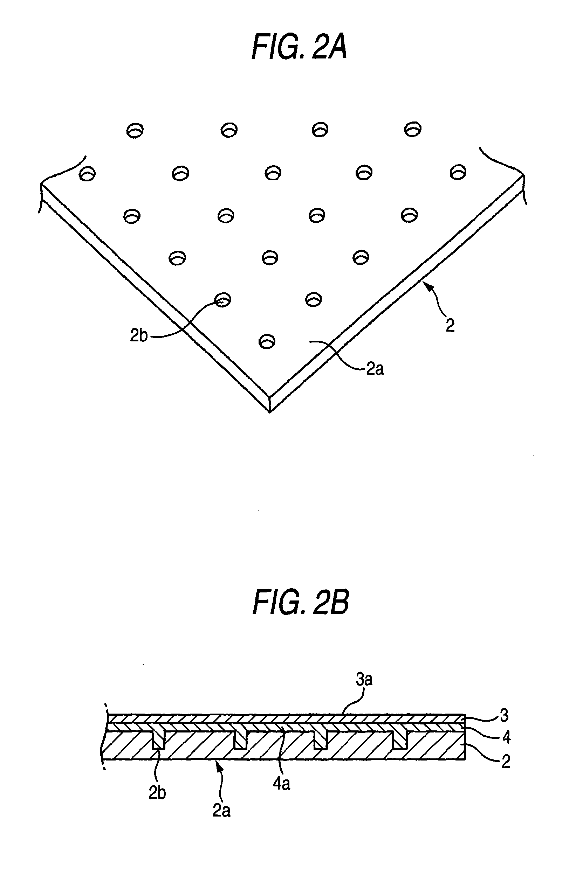

As shown in FIG. 2A, the non-woven cloth for forming the non-woven cloth layer 2 is provided in such a shape that minute concave portions 2b are formed on the entire surface at a predetermined pitch, and as shown in FIG. 2B, resin 4a of the adhesive layer 4 is filled inside the concave portion 2a at the interface with the outer resin layer 3.

The total area of the concave portion 2b above accounts for 6.3% to 25% of the entire surface of the non-woven cloth.

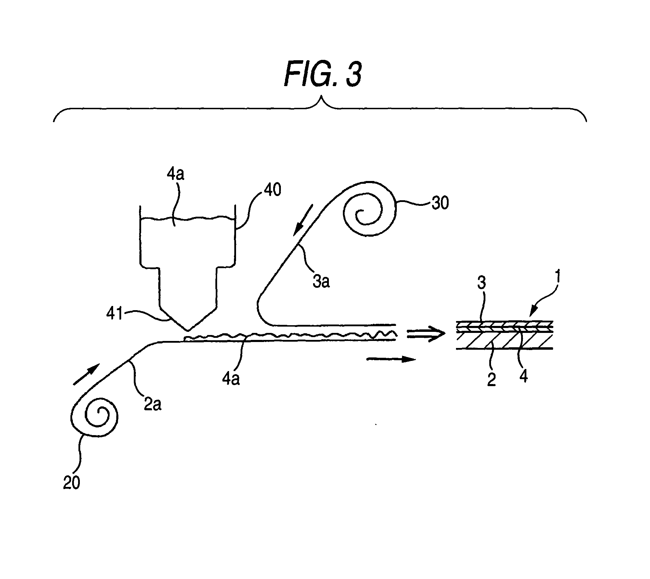

The protective member 1 above is produced by a method shown in FIG. 3, in which non-woven cloth 2a is continuously drawn out from a non-woven cloth coil 20, and during the transportation step, the upper plane of the non-woven cloth 2a is coated with the PP alloy resin 4a at a constant thickness by using a nozzle 41 provided to the front edge of a reservoir 40 of the PP alloy resin 4a. Then, a nylon film 3a is drawn out from a nylon film coil 30, and is laminated on the coated plane side of the protective member.

The sheet-shaped protective member 1 shown in FIG. 1A is produced by the process described above, however, after the step of laminating the nylon film above, the protective member 1 may be passed through rollers as to surely fill the PP alloy resin 4a in the concave portions 2b of the non-woven cloth 2a, and setting the total thickness of the sheet within the predetermined thickness in a range of from 0.3 mm to 0.5 mm.

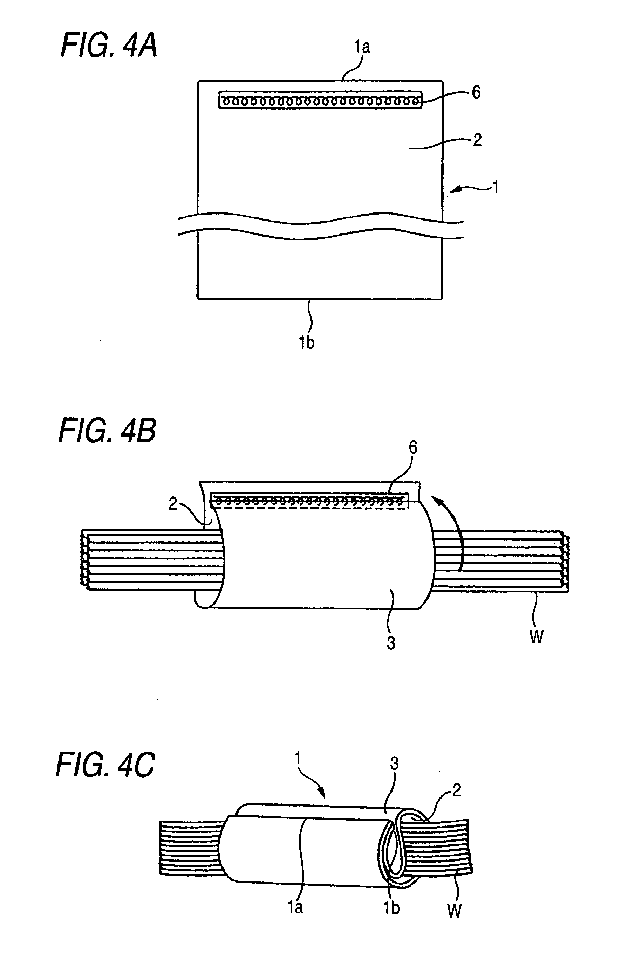

A method of cover-protecting the group of electric wiring constituting a wire harness using the sheet-like protective member 1 above is explained by referring to FIGS. 4A to 4C.

On the non-woven cloth layer 2 side of the protective member 1 provided at the predetermined length, as shown in FIG. 4A, a wide pressure sensitive adhesive double-coated tape 6 is adhered beforehand on the surface (the plane side disposed opposed to the outer resin layer) along one edge rim 1a in the longitudinal direction.

As shown in FIG. 4B, the protective member 1 is wound around the group of electric wiring W in such a manner that the non-woven cloth layer 2 should be disposed inside and double-folded, and the other edge rim 1b is adhered to the inside part of the pressure sensitive adhesive double coated tape 6 to make a cylindrical shape. As shown in FIG. 4C, the cylindrical part lc is further double-folded and the folded end ld is pressed to the outer side part of the pressure sensitive adhesive tape 6 to be adhered.

By covering the group of electric wiring with the protective member 1 according to the method above, the protective member 1 can be wounded around the outer periphery of the group of wiring W in a tightly adhered state, and yet, without exposing the pressure sensitive adhesive tape 6 outside. Furthermore, in case the protective member 1 is attached in such a state that it is being wounded around the group of electric wiring, the protective member 1 can be rendered fire-retardant, because the outer resin layer 3 made of a fire-retardant resin, i.e., nylon, is exposed to the outside. In addition, because the thickness of the protective member 1 is in a range of from 0.3 mm to 0.5 mm (0.3 mm in the embodiment), a wear resistance well comparable to that of a vinyl chloride sheet is achieved.

Furthermore, because the protective member 1 is made of a chlorine-free resin, no dioxins generate on its combustion for disposal.

The method of attaching the protective member to the group of electric wiring is not limited to the method above, and the protective member can be wounded around the protective member by the so-called "sushi-roll" method.

In any of the winding methods, the protective member 1 can be smoothly bended and wound around the group of electric wiring because the protective member 1 is rendered flexible by the non-woven cloth layer 2.

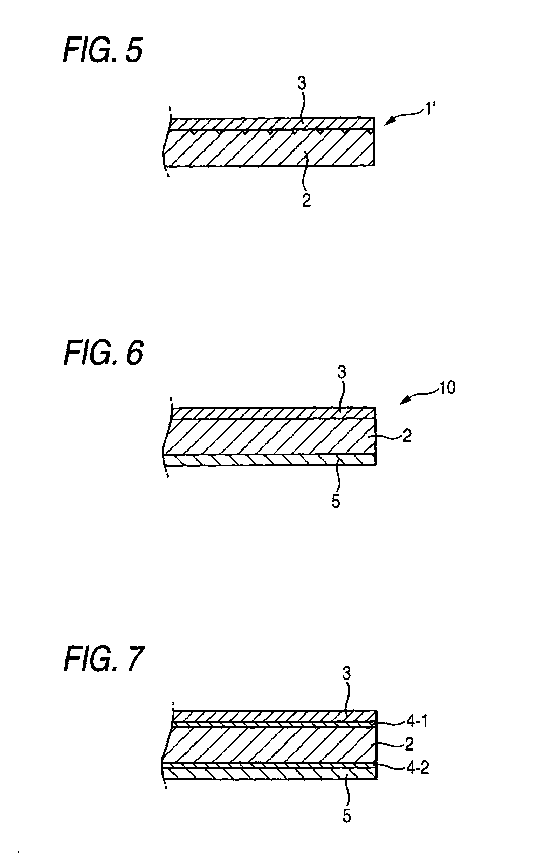

FIG. 5 shows a protective member 1' according to a modified example of the first embodiment, in which the non-woven cloth layer 2 and the outer resin layer 3 are directly heated and pressure-adhered without interposing an adhesive layer. That is, the non-woven cloth constituting the non-woven cloth layer 2 and the nylon film constituting the outer resin layer 3 are heated to around the temperature at which softening occurs, and are monolithically bonded by pressure adhering them at such a state.

In this modified example, the thickness of the non-woven cloth layer 2 is set to 0.2 mm, and the thickness of the outer resin layer is set to 0.1 mm.

The description for other constitutions is omitted because it is the same as in the first embodiment.

FIG. 6 shows a protective member 10 according to a second embodiment.

The protective member 10 has a three-layered structure obtained by heating and pressure adhering an outer resin layer 3 to the inner plane side of the non-woven cloth layer 2 and an inner plane resin layer 5 made of the same nylon film as that used for the outer resin layer 3.

The thickness of the non-woven cloth layer 2 is set to 0.2 mm, and the thickness of the outer and inner plane resin layers 3 and 5 is each set to 0.05 mm to give a total thickness of 0.3 mm.

Further, as shown in FIG. 7, adhesive layers 4-1 and 4-2, each made of a PP alloy, may be each interposed between the non-woven cloth layer 2 and the inner and the outer resin layers 5 and 3 in the same manner as in the first embodiment to realize a five-layered structure. In this case again, each of the layers are provided thin to achieve a total thickness of about 0.3 mm.

As described above, it can be clearly understood that the protective member for electric wires according to the present invention differs from the conventional general use vinyl chloride sheet in that it includes a laminated layer structure of a non-woven cloth layer and resin layers. The non-woven cloth layer provides flexibility, and by the laminated layer structure comprising the non-woven cloth layer, the resin layer can be provided thinner to make the overall thickness well comparable to that of the conventional vinyl chloride sheets: as a result, the conflicting requirements of flexibility and wear resistance are achieved, and the protective member is made lightweight at the same time. Furthermore, the protective member is rendered fire-retardant because a fire-retardant agent is blended to at least the outer resin layer. In particular, in case nylon is used as the fire-retardant resin, there is no need of blending a fire-retardant agent to the resin; thus, the protective member can be provided thin and the flexibility is not impaired.

Thus, as described above, the protective member for electric wires according to the present invention is formed from chlorine-free resins and does not generate dioxin by combustion on disposal, and the environmental problem can be overcome.

Furthermore, the protective member for electric wires according to the present invention possesses flexibility, wear resistance, and fire retardancy required for protective member for electric wires, and is therefore suitable as the protective member for electric wires for use as a substitute for vinyl chloride sheets.

As described above, the protective member for electric wires according to the present invention does not generate dioxin by combustion on disposal, and the environmental problem can be overcome, because it includes at least two-layered structure made of a non-woven cloth layer, which maintains flexibility, with a resin layer provided to the outer surface thereof, and because it employs a chlorine-free resin for the resin forming the non-woven cloth layer and the resin layer. Further, fire-retardancy is imparted to the sheet because a fire-retardant resin layer is provided on the outer surface of the sheet, Furthermore, because a non-woven cloth layer is provided, the total thickness of the entire sheet can be set to the thickness required for maintaining wear resistance even if the thickness of the resin layer is reduced. Accordingly, the thickness of the resin layer can be reduced as compared with the case of forming the sheet by resin layer alone, thereby achieving the required flexibility and wear resistance at the same time, and also decreasing the weight. In particular, since this protective member is attached to plural places of wire harness, large effect on reducing the overall weight is expected.

More specifically, the thickness of the non-woven cloth layer ranges from 0.2 mm to 0.4 mm, the thickness of the resin layer ranges from 0.03 mm to 0.2 mm, and the total thickness is set in a range of from 0.3 mm to 0.5 mm. For reference, the thickness of a vinyl chloride sheet conventionally used is about the same as above.

As described above, since the thickness of the present invention is about the same as that of conventional vinyl chloride sheet, the present invention can be easily handled, and yet, wear resistance, flexibility, and fire-retardancy well comparable to those of vinyl chloride sheet can be imparted thereto to provide an optimal substitute for the vinyl chloride sheet.

It is essential to provide a resin layer on the outer surface of the non-woven cloth layer from the viewpoint of achieving wear resistance, and it is also essential to form an outer resin layer with a fire-retardant resin to impart fire-retardancy. However, a resin layer made of a resin that is the same as that of the outer resin layer or a different one can be provided to the inner side of the non-woven cloth layer to establish a three-layered structure. Furthermore, the non-woven cloth layer and the inner and the outer resin layers may be heated and molten monolithically, or may be combined by interposing adhesive layers to form a five-layered structure.

In the case inner resin layer is provided to form a three-layered structure or a five-layered structure, a fire-retardant resin need not be always used for the resin layer provided on the inner plane side, but the use of fire-retardant resin is preferred to increase the fire-retardancy of the entire sheet.

Furthermore, it is preferred to set the entire thickness in the aforementioned range of from 0.3 mm to 0.5 mm for both of the three-layered structure and five-layered structure. In such cases, the inner and the outer resin layers are each reduced in thickness and the flexibility can be thereby improved; however, by providing a fire-retardant resin layer on the outer side alone, the wear resistance can be improved by increasing the thickness of the outer resin layer. Accordingly, the selection of two-layered structure or three-layered is made depending on the required performance according to the place at which the electric wiring using the sheet is established.

As the chlorine-free resin fire-retardant resin, usable are nylon resins and polyurethane resins. Otherwise, olefin resins such as polypropylene, polyethylene, and the like, having blended therein a fire-retarding agent, can be used. However, because the thickness of the resin layer increases and the flexibility is impaired due to the blending of fire-retarding agent, most preferably employed is nylon, because it exhibits fire-retardancy without blending any fire-retarding agent.

Accordingly, it is most preferred to form the outer resin layer with a nylon film, to which the non-woven cloth layer made from nylon yarn is formed, either via an adhesive comprising an olefin resin, PP nylon film, and the like, or by heating and melting. Furthermore, a coating layer having a required function may be further provided on the outer surface of the outer resin layer, or films differing in physical properties may be incorporated to make about 8 layers. In such a case, the total thickness of the entire sheet is confined in a range of from 0.3 mm to 0.5 mm.

Preferably, the non-woven cloth layer is a non-woven cloth layer made from nylon yarns, but it is not limited to nylon.

The non-woven cloth above having resin coverage of about 15 g/m² to 100 g/m² is used preferably. Furthermore, it is preferred that concave portions are provided on the entire surface, and that the concave portions are filled with the resin of the resin layer to be laminated thereon, such that the bonding force between the non-woven cloth layer and the resin layer is increased. In some cases, the concave portion above is formed by melt-adhering the non-woven cloth.

Furthermore, the non-woven cloth may be made from long fibers or short fibers. Moreover, preferably, the pitch of the concave portions is increased by providing pinpoint-like concave portions. This is based on the findings as such that higher flexibility was obtained on increasing the pitch, which have been acquired through experiments carried out by changing the pitch of the concave portions.

In addition, pinpoint-like holes may be provided in the place of concave portions, or, cross-like irregularities may be provided instead of pinpoint-like concave portions or holes; the shape of the irregularities is not limited.

Concerning the method of usage of the sheet above, the non-woven cloth layer is wounded around a group of electric wiring on the inner plane side and adhered in a wounded state with a pressure-sensitive adhesive tape that has been previously adhered to one edge of the non-woven cloth layer, and the outer resin layer is attached as the outer side plane to the outer side of the group of electric wiring.

In addition, an adhesive layer may be applied previously over the entire surface of the non-woven cloth layer. Furthermore, the sheet may be wounded by any of the winding methods employed for conventional vinyl chloride sheets, such as the so-called "ogami-maki" in which the both ends are matched, or "sushi-roll", and the like.

Although the present invention has been shown and described with reference to specific embodiments, various changes and modifications will be apparent to those skilled in the art from the teachings herein. Such changes and modifications as are obvious are deemed to come within the spirit, scope and contemplation of the invention as defined in the appended claims.

## Claims

1. A protective member for protecting electric wires, the protective member comprising:
a non-woven cloth layer having flexibility and made of a chlorine-free resin; and
an outer resin layer laminated monolithically on outer surface of the non-woven cloth layer, and made of a chlorine-free and fire-retardant resin,
wherein a thickness of the outer resin layer is configured to be not more than a thickness of the non-woven cloth layer, and
wherein a total thickness of the non-woven cloth layer and the outer resin layer is configured to have a predetermined wear resistance.

2. The protective member according to claim 1, wherein the outer resin layer is made of a resin selected from:
a nylon resin; polyurethane resin; and an olefin-based resin that contains a fire-retarding agent blended therein.

3. The protective member according to claim 1 further comprising:
an inner resin layer that is laminated on inner surface of the non-woven cloth layer and is made of chlorine-free resin; and
adhesive layers laminated between the non-woven cloth layer and each of the outer resin layer and the inner resin layer.

4. The protective member according to claim 1, wherein the non-woven cloth layer is formed of a plurality of concave portions provided over the entire surface thereof, and
wherein the concave portions are filled with the resin of the outer resin layer.

5. The protective member according to claim 1, wherein a nylon film is provided as the outer resin layer, and
wherein a non-woven cloth made of nylon yarn is provided as the non-woven cloth layer.

6. The protective member according to claim 1, wherein the thickness of the non-woven cloth layer is configured to be in a range of from 0.2 mm to 0.4 mm,
wherein the thickness of the outer resin layer is configured to be in a range of from 0.03 mm to 0.2 mm,
wherein the total thickness is configured to be in a range of from 0.3 mm to 0.5 mm.

7. The protective member according to claim 1, wherein the protective member is to be wounded around a group of electric wires so that the non-woven cloth layer being placed on an inward side, and to be fixed in a wounded state with an adhesive tape.
